# EUROPEAN PATENT APPLICATION

(11) **EP 4 818 834 A1**
(43) Date of publication of application: **07.10.2026**
(21) Application number: 26167768.6
(22) Date of filing: 25.03.2026
(51) Int. Cl.: G05B 19/418

(54) **MANUFACTURING EXECUTION CONTROL SYSTEM, MANUFACTURING EXECUTION CONTROL METHOD, AND MANUFACTURING EXECUTION CONTROL PROGRAM**

(30) Priority: 28.03.2025 JP 2025055858
(71) Applicant: SCREEN Holdings Co., Ltd., Kyoto-shi, Kyoto 602-8585 (JP)
(72) Inventor: OKUNO, Yasutoshi, Kyoto, 602-8585 (JP); TAKEMOTO, Yasuhiro, Kyoto, 602-8585 (JP); MAEDA, Naoki, Kyoto, 602-8585 (JP); NAKAMURA, Yasunori, Kyoto, 602-8585 (JP); KAWAI, Jun, Kyoto, 602-8585 (JP); MIKAWA, Takumi, Kyoto, 602-8585 (JP); HORIGUCHI, Hiroshi, Kyoto, 602-8585 (JP); NISHIMURA, Takayuki, Kyoto, 602-8585 (JP); IMAMURA, Masanori, Kyoto, 602-8585 (JP); AKIZUKI, Yusuke, Kyoto, 602-8585 (JP)
(74) Representative: Goddar, Heinz J.

(57) **Abstract**

To provide a manufacturing execution control system capable of shortening a processing lead time of a priority lot in a manufacturing line. In a manufacturing execution control system 1000, a virtualization processing apparatus 110 collects processing information by using a predetermined substrate cleaning apparatus group i as a hub in a wafer processing sequence, and, from an existing MES 100 side, the substrate cleaning apparatus group i is virtually identified and controlled as a single manufacturing apparatus using a single piece of identification information. Information for specifying a priority lot and information indicating priority are shared among group control apparatuses 310.i to 310.i+2 that control the substrate cleaning apparatus group i, and preparation for processing of the priority lot is notified in advance from a group control apparatus of a preceding process to a group control apparatus of a subsequent process. In the substrate cleaning apparatus group i of the subsequent process, preparation for processing the priority lot is performed in advance, thereby enabling the priority lot to be processed by overtaking other normal lots.

## Description

### BACKGROUND OF THE INVENTION

### Field of the Invention

The present invention relates to a manufacturing execution control system, a manufacturing execution control method, and a manufacturing execution control program, which are used to manage a plurality of manufacturing apparatuses.

### Related Art

### (Manufacturing Apparatuses in a Device Manufacturing Process)

Conventionally, in a manufacturing process of semiconductor devices, substrate processing apparatuses that perform various types of processing on substrates such as semiconductor substrates have been used. Examples of the substrate processing apparatuses include substrate cleaning apparatuses, heat treatment apparatuses, film formation apparatuses, lithography apparatuses, and etching apparatuses. Typically, in many cases, a large number of substrate processing apparatuses are orderly arranged in a large clean room.

Such substrate processing apparatuses are not limited to manufacturing lines for semiconductor devices such as semiconductor integrated circuits, and are also used in manufacturing lines that perform various types of processing on various substrates, such as FPD (Flat Panel Display) substrates used for liquid crystal display devices or organic EL (Electro Luminescence) display devices, semiconductor substrates, optical disk substrates, magnetic disk substrates, magneto-optical disk substrates, photomask substrates, ceramic substrates, or solar cell substrates.

For example, in a manufacturing line for semiconductor integrated circuits, in each substrate processing apparatus, a plurality of substrates are grouped in advance into units called lots, and a series of processing operations are performed on the substrates in accordance with predetermined processing procedures (recipes). Then, in accordance with the manufacturing process of the semiconductor integrated circuits to be manufactured, the lots are sequentially transported to substrate processing apparatuses responsible for respective manufacturing processes, and the substrate processing apparatuses execute a series of processes, for example, processes such as substrate cleaning, film formation, lithography, and etching.

When lots of semiconductor substrates are transported between the substrate processing apparatuses, the semiconductor substrates are stored in and transported by cassette containers for holding and accommodating wafers, which are referred to as "wafer carriers". Open cassettes, SMIF (Standard Mechanical Interface) pods, FOUPs (Front Opening Unified Pods), and the like are used. In recent years, in order to maintain a high degree of cleanliness for wafers, semiconductor substrates are often transported by an automated transport system using FOUPs. By using FOUPs, it is possible to reduce adhesion of foreign matter to wafers and reduce running costs of clean rooms, without maintaining the entire clean room at a high level of cleanliness.

For example, in many cases, management of lots flowing through a manufacturing line is performed by assigning identification information of carriers as IDs to wafer carriers such as FOUPs. For example, Patent Document 1 discloses a configuration in which, in an automated transport system, each carrier that is a transported object is provided with carrier identification information for identifying the carrier, such as a carrier ID (barcode, RFID, infrared communication ID, or the like). When transferring a carrier to a storage position such as a manufacturing apparatus, a stocker, a temporary placement table, or a simple buffer apparatus that is installed in parallel along a transport path, an ID read/write apparatus is installed at an input port, an output port, or an interface apparatus portion of both ports, and, via the ID read/write apparatus, a control apparatus of the automated transport system confirms the carrier ID and performs reading and writing of the managed carrier ID.

For example, Patent Document 2 discloses an "automated transport system" having a configuration that manages carrier IDs as described above.

In a manufacturing line for semiconductor devices, there are cases where it is necessary to introduce into the line a priority lot that is designated to be processed with priority over other lot processing, and to perform processing of the manufacturing process for the priority lot.

Patent Document 3 discloses the following configuration.

Specifically, there are cases where it becomes necessary to urgently process wafers in another FOUP that is not included in a schedule, due to reasons such as requests from product delivery destinations, production adjustments, or process testing. Accordingly, a control unit of a substrate processing apparatus is connected to a lot information acquisition unit, and acquires information indicating the number of priority wafers WP in a FOUP of a priority lot and the priority thereof, as well as information relating to an allowable processing time until processing of the priority lot is completed. In a storage unit of the control unit, a priority processing program is stored, the priority processing program being configured to allocate some or all of, for example, a total of 20 liquid processing units provided in a liquid processing block in the substrate processing apparatus, to priority processing units for processing the priority wafers WP, and to execute liquid processing in parallel on the priority wafers WP and normal wafers W in the respective processing units.

That is, Patent Document 3 discloses a configuration in which, when a plurality of processing blocks are provided in one substrate processing apparatus, substrate processing of a subsequent priority lot is executed in parallel with processing of a normal lot, thereby enabling interruption processing of the subsequent priority lot.
Patent Document 1: Japanese Unexamined Patent Application, Publication No. 2006-273457
Patent Document 2: International Publication No. WO 2013/150859
Patent Document 3: Japanese Patent No. 5445006

### SUMMARY OF THE INVENTION

As described above, in a configuration in which parallel processing of a priority lot is performed in one substrate processing apparatus in order to shorten a processing lead time of the priority lot, there has been a problem in that, even when processing in the substrate processing apparatus is completed, processing waiting for the priority lot may occur in subsequent processes.

On the other hand, a control apparatus of an automated transport system and a process progress management system involve high introduction costs. For this reason, introducing a new system in order to improve a process flow for the purpose of shortening the processing lead time of a priority lot not only poses cost-related problems, but also may require a long time until the new system becomes operational.

In other words, there has been a problem in that no system has been proposed that controls processing of a priority lot by taking into account a flow of processes in a manufacturing line of lots, while maintaining an existing production control scheme.

The present invention has been made to solve the problems described above, and an object of the present invention is to provide a manufacturing execution control system, a manufacturing execution control method, and a manufacturing execution control program that are capable of shortening a processing lead time of a priority lot in a manufacturing line.

Another object of the present invention is to provide a manufacturing execution control system, a manufacturing execution control method, and a manufacturing execution control program that control a flow of processes in a manufacturing line of lots so as to prioritize processing of a priority lot, while maintaining an existing production control scheme.

According to one aspect of the present invention, there is provided a manufacturing execution control system for controlling production processing of a plurality of objects to be processed as a group in a manufacturing line, in which the manufacturing line includes a plurality of manufacturing apparatuses arranged as apparatus groups, and in which the manufacturing apparatuses respectively execute a plurality of manufacturing processes using the plurality of objects to be processed as processing units, the manufacturing execution control system including: a production control execution apparatus configured to create, for a group of the objects to be processed, a production plan including a series of the manufacturing processes and information on processing priority for a specific priority group, and based on the production plan, generate and output process control signals for processing of the objects to be processed by identifying, for each of the manufacturing processes, the apparatus groups using a single identification code obtained by virtualizing the apparatus groups; a virtualization processing apparatus configured to receive the process control signals from the production control execution apparatus and to convert the process control signals into group control signals for the apparatus groups of the manufacturing processes identified by the identification code; and a plurality of group control apparatuses provided corresponding to the respective apparatus groups and configured to individually control corresponding manufacturing process apparatuses in accordance with the group control signals, in which the virtualization processing apparatus includes a memory storing a program and one or more processors, and in which the one or more processors are configured, based on the program, to: (i) virtualize control signals exchanged between the production control execution apparatus and the apparatus groups and convert the control signals into the group control signals; (ii) acquire state information of the respective apparatus groups; and (iii) based on (a) a transport status of a transport carrier for transporting the group of objects to be processed acquired as the state information, and (b) a priority of the objects to be processed in the transport carrier specified in accordance with information from the production control execution apparatus, output, in response to arrival of a transport carrier having a high priority at a first group control apparatus among the group control apparatuses, a notification to a second group control apparatus of a subsequent process indicating that the transport carrier having the high priority is scheduled to arrive,
in which the second group control apparatus is configured, in response to the notification, to give a waiting instruction to one manufacturing process apparatus among the apparatus group corresponding to a control target, the waiting instruction instructing the manufacturing process apparatus to wait for processing until arrival of the transport carrier having the high priority.

Preferably, the information from the production control execution apparatus includes: lot identification information for identifying the group, the lot identification information being included in information for identifying the transport carrier; and priority information, the priority information being included in information for instructing the manufacturing process apparatus to execute the manufacturing process.

Preferably, each of the manufacturing process apparatuses includes a plurality of ports for receiving the transport carrier, and
in which the manufacturing process apparatus that receives the waiting instruction from the second group control apparatus stops accepting the transport carrier at one of the plurality of ports until arrival of the transport carrier having the high priority.

Preferably, the one or more processors are configured, in processing for outputting the notification indicating that the transport carrier having the high priority is scheduled to arrive, to estimate, as an initial setting, a position of each group control apparatus in a process flow of the manufacturing line, based on the lot identification information.

Preferably, the one or more processors are configured, in processing for acquiring the state information of the respective apparatus groups, to acquire, for each piece of the lot identification information, information on passage times through the manufacturing processes corresponding to the apparatus groups as time-series data, and to classify, based on the time-series data, the lot identification information into a plurality of process patterns in accordance with patterns of the passage times; and in processing for outputting the notification indicating that the transport carrier having the high priority is scheduled to arrive, to notify an estimated arrival time at which the transport carrier having the high priority is scheduled to arrive, in accordance with (a) the lot identification information, (b) a corresponding process pattern, and (c) the priority information, in which the second group control apparatus is configured to output the waiting instruction in accordance with the estimated arrival time.

Preferably, the manufacturing process is a semiconductor device manufacturing process, and the manufacturing process apparatus is a semiconductor wafer cleaning apparatus.

According to another aspect of the present invention, there is provided a computer-implemented manufacturing execution control method for controlling production processing of a plurality of objects to be processed as a group in a manufacturing line, in which the manufacturing line includes a plurality of manufacturing apparatuses arranged as apparatus groups, and in which the manufacturing apparatuses respectively execute a plurality of manufacturing processes for processing the plurality of objects to be processed as processing units, the manufacturing execution control method including the steps of: creating, by a production control execution apparatus, for the group of objects to be processed, a production plan including a series of the manufacturing processes and information on processing priority for a specific priority group, and, based on the production plan, generating and outputting process control signals for processing of the objects to be processed by identifying, for each of the manufacturing processes, the apparatus groups using a single identification code obtained by virtualizing the apparatus groups; receiving the process control signals from the production control execution apparatus and converting and outputting, by a virtualization processing apparatus, the process control signals into group control signals for the apparatus groups of the manufacturing processes identified by the identification code; and individually controlling, by group control apparatuses provided corresponding to the respective apparatus groups, corresponding manufacturing process apparatuses in accordance with the group control signals, in which the step of converting and outputting includes: virtualizing control signals exchanged between the production control execution apparatus and the apparatus groups and converting the control signals into the group control signals; acquiring state information of the respective apparatus groups; and based on (a) a transport status of a transport carrier for transporting the group of objects to be processed acquired by the acquiring and (b) a priority of the objects to be processed in the transport carrier specified in accordance with information from the production control execution apparatus, outputting, in response to arrival of a transport carrier having a high priority at a first group control apparatus among the group control apparatuses, a notification to a second group control apparatus of a subsequent process indicating that the transport carrier having the high priority is scheduled to arrive, in which the second group control apparatus gives, in response to the notification, a waiting instruction to one manufacturing process apparatus among the apparatus group corresponding to a control target, the waiting instruction instructing the manufacturing process apparatus to wait for processing until arrival of the transport carrier having the high priority.

According to still another aspect of the present invention, there is provided a manufacturing execution control program for causing a computer to execute production processing control for controlling production processing of a plurality of objects to be processed as a group in a manufacturing line, in which the manufacturing line includes a plurality of manufacturing apparatuses arranged as apparatus groups, and in which the manufacturing apparatuses respectively execute a plurality of manufacturing processes for processing the plurality of objects to be processed as processing units, in which a manufacturing execution control system includes: a production control execution apparatus configured to create, for the group of the objects to be processed, a production plan including a series of the manufacturing processes and information on processing priority for a specific priority group, and, based on the production plan, to generate and output process control signals for processing of the objects to be processed by identifying, for each of the manufacturing processes, the apparatus groups using a single identification code obtained by virtualizing the apparatus groups; and a plurality of group control apparatuses provided corresponding to the respective apparatus groups and configured to individually control corresponding manufacturing process apparatuses in accordance with group control signals, in which the computer executes a step of receiving the process control signals from the production control execution apparatus and converting and outputting, by a virtualization processing apparatus, the process control signals into group control signals for the apparatus groups of the manufacturing processes identified by the identification code, in which the step of converting and outputting includes: a virtualization conversion step of virtualizing control signals exchanged between the production control execution apparatus and the apparatus groups and converting the control signals into the group control signals; an apparatus state acquisition step of acquiring state information of the respective apparatus groups; and a carrier transport control step of, based on (a) a transport status of a transport carrier for transporting the group of objects to be processed acquired by the apparatus state acquisition step and (b) a priority of the objects to be processed in the transport carrier specified in accordance with information from the production control execution apparatus, outputting, in response to arrival of a transport carrier having a high priority at a first group control apparatus among the group control apparatuses, a notification to a second group control apparatus of a subsequent process indicating that the transport carrier having the high priority is scheduled to arrive, in which the second group control apparatus is configured to, in response to the notification, give a waiting instruction to one manufacturing process apparatus among the apparatus group corresponding to a control target, the waiting instruction instructing the manufacturing process apparatus to wait for processing until arrival of the transport carrier having the high priority.

According to still another aspect of the present invention, there is provided a manufacturing execution control system for controlling production processing of a plurality of objects to be processed as a group in a manufacturing line, in which the manufacturing line includes a plurality of manufacturing apparatuses arranged as apparatus groups, and in which the manufacturing apparatuses respectively execute a plurality of manufacturing processes for processing the plurality of objects to be processed as processing units, the manufacturing execution control system controlling the production processing in cooperation with a production control execution apparatus that creates, for a group of the objects to be processed, a production plan including a series of the manufacturing processes and information on processing priority for a specific priority group, and generates and outputs process control signals for processing of the objects to be processed based on the production plan, the manufacturing execution control system including: a virtualization processing apparatus configured to receive the process control signals from the production control execution apparatus and convert the process control signals into group control signals for apparatus groups of the manufacturing processes identified by a single identification code obtained by virtualizing the apparatus groups for each manufacturing process; and a plurality of group control apparatuses provided corresponding to the respective apparatus groups and configured to individually control corresponding manufacturing process apparatuses in accordance with the group control signals, in which the virtualization processing apparatus includes a memory storing a program and one or more processors, and in which the one or more processors are configured, based on the program, to: (i) virtualize control signals exchanged between the production control execution apparatus and the apparatus groups and convert the control signals into the group control signals for the group control apparatuses; (ii) acquire state information of the respective apparatus groups and output, to the production control execution apparatus, the identification code so that the production control execution apparatus identifies the apparatus groups by the identification code and generates the process control signals for processing of the objects to be processed; and (iii) based on (a) a transport status of a transport carrier for transporting the group of objects to be processed acquired as the state information, and (b) a priority of the objects to be processed in the transport carrier specified in accordance with information from the production control execution apparatus, output, in response to arrival of a transport carrier having a high priority at a first group control apparatus among the group control apparatuses, a notification to a second group control apparatus of a subsequent process indicating that the transport carrier having the high priority is scheduled to arrive, in which the second group control apparatus is configured to, in response to the notification, give a waiting instruction to one manufacturing process apparatus among the apparatus group corresponding to a control target, the waiting instruction instructing the manufacturing process apparatus to wait for processing until arrival of the transport carrier having the high priority.

According to the present invention, a manufacturing execution control system, a manufacturing execution control method, and a manufacturing execution control program that are capable of shortening a processing lead time of a priority lot in a manufacturing line are realized.

With the manufacturing execution control system of the present invention, it becomes possible to control a flow of processes in a manufacturing line of lots so as to prioritize processing of a priority lot, while maintaining an existing production control scheme.

### BRIEF DESCRIPTION OF THE DRAWINGS

FIG. 1 is a conceptual diagram illustrating a configuration of a manufacturing execution control system 1000 for substrate processing apparatuses in a semiconductor device manufacturing line according to Embodiment 1;
FIG. 2 is a plan view for explaining a configuration of a substrate cleaning apparatus 310.i.1 according to Embodiment 1;
FIG. 3 is a schematic block diagram illustrating a configuration of a control apparatus 3;
FIG. 4 is a schematic block diagram for explaining a configuration in which the manufacturing execution control system 1000 controls production processes in a manufacturing line including cleaning apparatus groups i to i+2;
FIG. 5 is a functional block diagram for explaining a configuration of a virtualization processing apparatus 110;
FIG. 6 is a block diagram for explaining a hardware configuration of the virtualization processing apparatus 110;
FIG. 7 is a flowchart for explaining processing executed by the virtualization processing apparatus 110 according to Embodiment 1;
FIG. 8 is a conceptual diagram illustrating a procedure of initialization processing;
FIG. 9 is a flowchart for explaining processing executed by the virtualization processing apparatus 110 in a modification of Embodiment 1; and
FIG. 10 is a flowchart for explaining processing executed by the virtualization processing apparatus 110 according to Embodiment 2.

### DETAILED DESCRIPTION OF THE INVENTION

Hereinafter, configurations of a manufacturing execution control system, a manufacturing execution control method, and a manufacturing execution control program according to embodiments of the present invention will be described. In the following embodiments, constituent elements and processing steps denoted by the same reference signs are identical or corresponding, and redundant descriptions will be omitted where unnecessary.

In the following description, software for a manufacturing execution control method executed on a computer of the manufacturing execution control system of the present invention is described as a computer program that is installed on a single computer apparatus and executes production execution control.

However, processing of the manufacturing execution control program may be distributed and executed by a plurality of computer apparatuses, and processors that execute computer processing may be single or plural. Processing of the manufacturing execution control program is not limited to a program installed on such general-purpose computer apparatuses, and may generally be implemented as a configuration realized as a dedicated arithmetic processing apparatus in which an processor and a storage apparatus are combined.

### (Definition of Terms)

As used herein, the term "semiconductor wafer" typically refers to a wafer that is cut out from a single-crystal silicon (Si) ingot and shaped to have a predetermined thickness and diameter. However, the type of semiconductor is not limited to silicon, and other semiconductors may be used. Further, as a base material of the wafer, an insulating wafer may be used, and a semiconductor layer may be grown on a surface of the insulating wafer by a predetermined crystal growth method.

The term "transport carrier" refers to a wafer carrier that is a box-shaped container that accommodates and protects a plurality of objects to be processed (for example, semiconductor wafers) in a manufacturing line and is transported as a transported object. In an automated transport system, the transport carrier refers to, for example, a FOUP.

Hereinafter, the manufacturing execution control system will be described by taking a semiconductor device manufacturing line as an example.

In the embodiments described below, the manufacturing execution control system has a configuration in which a predetermined manufacturing apparatus group (for example, a substrate cleaning apparatus group) is used as a hub, and, from a production control execution apparatus (MES described later), the manufacturing apparatus group is virtually identified and controlled as a single manufacturing apparatus using a single piece of identification information. Information for specifying a priority lot and information indicating priority are shared among group control apparatuses that control the manufacturing apparatus group, and advance notification for preparation for processing of the priority lot is provided from a group control apparatus of a preceding process to a group control apparatus of a subsequent process. As a result, in the manufacturing apparatus group of the subsequent process, preparation for processing the priority lot is performed in advance, thereby realizing a process flow in which the priority lot is processed ahead of other normal lots.

### [Embodiment 1]

### (Configuration of Manufacturing execution control system)

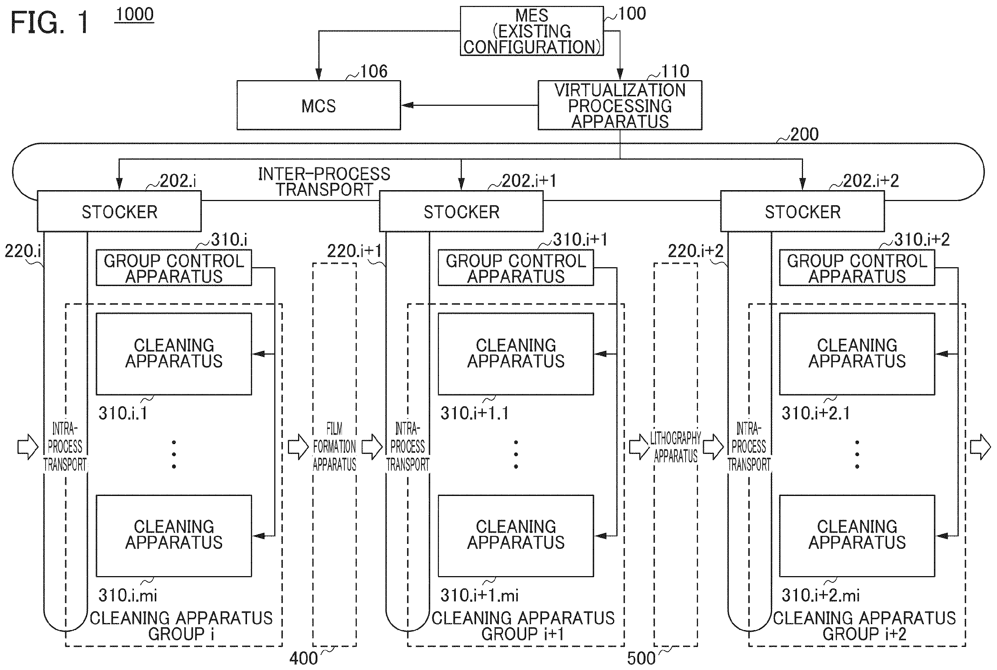

FIG. 1 is a conceptual diagram illustrating a configuration of a manufacturing execution control system 1000 for substrate processing apparatuses in a semiconductor device manufacturing line according to Embodiment 1.

Referring to FIG. 1, the manufacturing execution control system 1000 includes, as a transport control system, an MES (Manufacturing Execution System) 100 and an MCS (Material Control System) 106.

The MES 100 is an integrated production information system that plays a role of managing various types of information in the manufacturing line. In general, in combination with a production point information management (POP: Point of Production) function, the MES 100 includes functions for performing various types of production support and management, such as process management, lot management, quality management, manufacturing instruction, progress management, in-factory logistics management, production equipment control, and maintenance management.

The MCS 106 is a system that is installed between inter-process transport equipment, intra-process transport equipment, and stockers, and the MES 100, and has a function of timely transmitting various instructions from the MES 100 to the respective transport equipment and collectively transmitting reports from the respective transport equipment to the MES 100. More specifically, the MCS 106 is a transport instruction apparatus, and creates a transport schedule for transported objects (wafer carriers) based on a semiconductor manufacturing schedule, and performs transport control by sending transport commands to an inter-process transport system 200 and intra-process transport systems 220.i (i: a natural number, and a number corresponding to a configuration of the manufacturing line is provided) based on the transport schedule.

Here, as an example of transported objects in the manufacturing line, a transport carrier (FOUP) that accommodates a plurality of semiconductor wafers will be described. On an upper surface of the transported object, a flange portion that is held by a gripper of a vehicle described later is provided. On a side surface of the transported object, a detachable lid for loading and unloading semiconductor wafers is attached, and the transported object is configured such that identification information, namely, a carrier ID, is readable from outside.

Here, as the inter-process transport system 200 and the intra-process transport systems 220.i, for example, transport systems using transport vehicles that travel along tracks, such as OHTs (Overhead Hoist Transports) or OHSs (Overhead Shuttles) that travel on tracks suspended from a ceiling and transport FOUPs, or transport systems using transport carts that autonomously travel on a floor, are used.

Between the inter-process transport system 200 and the intra-process transport systems 220.i, stockers 202.i, which are places for causing FOUPs to wait, are respectively provided.

In FIG. 1, a case is illustrated in which semiconductor substrates accommodated in FOUPs undergo corresponding processing in respective processes of "cleaning" → "film formation" → "cleaning" → "lithography" → "cleaning".

That is, a cleaning apparatus group i includes substrate cleaning apparatuses 310.i.1 to 310.i.mi (mi: a natural number, and a number corresponding to a configuration of the manufacturing line is provided). Semiconductor substrates that are transported by the inter-process transport system 200 and the intra-process transport system 220.i and cleaned in the cleaning apparatus group i are transported to a film formation apparatus 400 by an intra-process transport system for the film formation apparatus 400 (not illustrated) and the inter-process transport system 200, and predetermined film formation processing is executed. The film formation apparatus 400 may include a plurality of film formation apparatuses.

Then, the semiconductor substrates on which film formation processing has been executed by the film formation apparatus 400 are transported to a cleaning apparatus group i+1 that is responsible for the next process, and cleaning processing is executed. The cleaning apparatus group i+1 includes substrate cleaning apparatuses 310.i+1.1 to 310.i+1.mi.

Further, the semiconductor substrates cleaned in the cleaning apparatus group i+1 are transported by the inter-process transport system 200 and the intra-process transport system 220.i+1 to a lithography apparatus 500 of the next process, and are transported to the lithography apparatus 500 by an intra-process transport system for the lithography apparatus 500 (not illustrated) and the inter-process transport system 200, and predetermined lithography processing is executed. The lithography apparatus 500 may include a plurality of lithography apparatuses.

Then, the semiconductor substrates on which lithography processing has been executed by the lithography apparatus 500 are transported to a cleaning apparatus group i+2 that is responsible for the next process, and cleaning processing is executed. The cleaning apparatus group i+2 includes substrate cleaning apparatuses 310.i+2.1 to 310.i+2.mi.

Further, the semiconductor substrates on which cleaning processing has been executed in the cleaning apparatus group i+2 are transported to a subsequent process, and, for example, etching processing is executed.

In FIG. 1, the number mi is assumed to be the same for the cleaning apparatus groups i to i+2; however, the cleaning apparatus groups may have different numbers of apparatuses.

As also illustrated in FIG. 1, in a semiconductor device manufacturing line, substrate cleaning processes are executed before and after processing by heat treatment apparatuses, film formation apparatuses, lithography apparatuses, and etching apparatuses, in order to maintain cleanliness of semiconductor substrates. In other words, in terms of a physical flow of lot processing, the cleaning apparatus groups have a position as a hub for a flow of "lots (wafer carriers)" in the semiconductor manufacturing line, in that lots necessarily pass through the cleaning apparatus groups. Further, from a viewpoint of management of production control, the cleaning apparatus groups can also be regarded as hubs for collecting data on actual flow conditions of "lots (wafer carriers)" in the semiconductor manufacturing line.

Here, in FIG. 1, the MES 100 and the MCS 106 have configurations conforming to standard specifications such as SEMI (Semiconductor Equipment and Materials International) standards, on the assumption that a plurality of substrate processing apparatuses are individually controlled.

On the other hand, the manufacturing execution control system 1000 is provided with a virtualization processing apparatus 110, and, in cooperation with group control apparatuses 310.i provided for the respective cleaning apparatus groups i, virtualizes and controls a plurality of substrate cleaning apparatuses included in the cleaning apparatus group i as if the plurality of substrate cleaning apparatuses were a single apparatus. That is, for example, by the virtualization processing apparatus 110 and the group control apparatus 310.i, when one cleaning apparatus group includes five cleaning apparatuses and each cleaning apparatus has three load ports, the cleaning apparatus group is virtualized as if it were a single substrate cleaning apparatus having fifteen (=3×5) load ports and being recognized by a single piece of apparatus identification information (hereinafter referred to as "virtualized apparatus identification information"), and the MES 100 controls the cleaning apparatus group based on the virtualized apparatus identification information.

With such a configuration, as will be described later, when lots having different priorities are introduced into the manufacturing line, it becomes possible to flexibly and preferentially process a lot having a higher priority.

In FIG. 1, the substrate processing apparatuses that are virtualized and controlled by the group control apparatuses are assumed to be cleaning apparatus groups including a plurality of substrate cleaning apparatuses. However, for example, other substrate processing apparatuses such as heat treatment apparatuses, film formation apparatuses, lithography apparatuses, and etching apparatuses may be virtualized and controlled as substrate processing apparatus groups by group control apparatuses.

### (Configuration of Substrate Cleaning Apparatus)

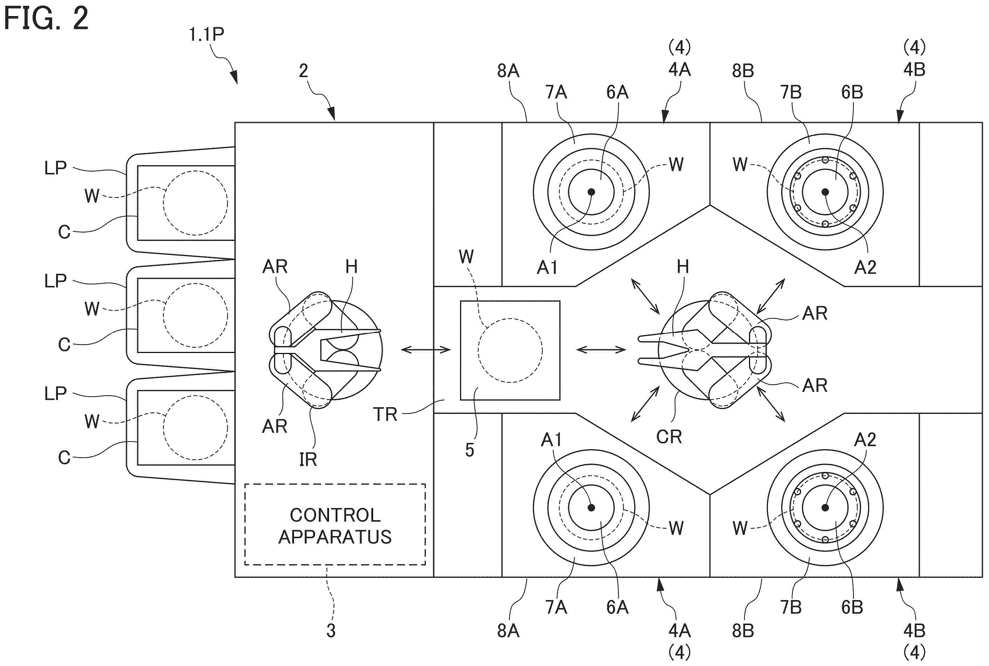

FIG. 2 is a plan view for explaining a configuration of a substrate cleaning apparatus 310.i.1 according to Embodiment 1.

Other substrate cleaning apparatuses have the same configuration.

The substrate cleaning apparatus 310.i.1 is a system for processing semiconductor substrates W such as silicon wafers. The substrate cleaning apparatus 310.i.1 includes: a single-wafer substrate processing apparatus (single-wafer processing apparatus) 2 that processes the substrates W one by one; and a control apparatus (controller) 3 that controls the substrate cleaning apparatus 310.i.1.

The substrate cleaning apparatus 310.i.1 includes: a plurality of liquid processing apparatuses 4 that process the substrates W using a liquid; a plurality of load ports (container placement members) LP on which a plurality of carriers (containers) C that accommodate a plurality of substrates W to be processed by the liquid processing apparatuses 4 are respectively placed; and a plurality of transport robots (an indexer robot IR and a main transport robot CR) that transport the substrates W between the load ports LP and the liquid processing apparatuses 4. The load ports are ports for loading and unloading transported objects (carriers) into and out of the substrate cleaning apparatus 310.i.1.

In this embodiment, the substrate W is a disk-shaped substrate. The diameter of the substrate W is, for example, 300 mm. The substrate W includes a protected surface W1 and a surface to be cleaned W2 on an opposite side from the protected surface W1. The protected surface W1 is a surface to be protected, and the surface to be cleaned W2 is a surface to be subjected to physical cleaning. The protected surface W1 is either a device surface on which a fine circuit pattern is formed or a non-device surface on which no circuit pattern is formed. The surface to be cleaned W2 is also either a device surface or a non-device surface. Typically, the protected surface W1 is the device surface, and the surface to be cleaned W2 is the non-device surface.

The plurality of transport robots include: an indexer robot IR that loads and unloads the substrates W with respect to the carrier C on the load port LP; and a main transport robot CR that transfers the substrates W to and from the indexer robot IR and loads and unloads the substrates W with respect to the plurality of liquid processing apparatuses 4.

The substrate cleaning apparatus 310.i.1 further includes an inversion unit 5 that receives the substrates W from the indexer robot IR and the main transport robot CR, grips a peripheral portion of each substrate W, and inverts the substrate W. By the substrate W being inverted by the inversion unit 5, an orientation of the substrate W changes to either a first orientation or a second orientation in which the protected surface W1 faces downward.

The indexer robot IR and the main transport robot CR are disposed on a transport path TR extending from the load ports LP to the plurality of liquid processing apparatuses 4. The inversion unit 5 is positioned on the transport path TR between the indexer robot IR and the main transport robot CR.

Each transport robot is an articulated-arm robot that includes: a pair of articulated arms AR; and a pair of hands H respectively provided at distal ends of the pair of articulated arms AR so as to be vertically separated from each other. Each hand H provided in each transport robot is configured to hold the substrate W by contacting a peripheral portion of a surface, among the surface to be cleaned W2 and the protected surface W1, that faces downward.

The plurality of liquid processing apparatuses 4 form four processing towers that are respectively disposed at four horizontally separated positions. Each processing tower includes a plurality of liquid processing apparatuses 4 stacked in a vertical direction. The four processing towers are disposed as two towers on each side of the transport path TR.

The plurality of liquid processing apparatuses 4 include: a plurality of film application and removal apparatuses 4A that apply a protective film to the protected surface W1 of the substrate W or remove the protective film from the protected surface W1; and a plurality of physical cleaning apparatuses 4B that execute physical cleaning on the surface to be cleaned W2 of the substrate W. The physical cleaning refers to cleaning of the substrate W by applying a physical force to the substrate W. The physical force refers to an impact (kinetic energy) applied to the substrate W by a cleaning liquid or a cleaning member.

Each physical cleaning apparatus 4B includes a second spin chuck 6B that holds the substrate W horizontally and rotates the substrate W about a vertical rotation axis A2 (vertical axis) passing through a center of the substrate W, a second processing cup 7B that surrounds the second spin chuck 6B and receives liquid scattered from the substrate W, and a second chamber 8B that accommodates the second spin chuck 6B and the second processing cup 7B.

The first chamber 8A is formed with an entrance/exit (not illustrated) for loading and unloading the substrate W by the main transport robot CR. The first chamber 8A is provided with a shutter unit (not illustrated) that opens and closes the entrance/exit. The second chamber 8B, similarly to the first chamber 8A, has an entrance/exit (not illustrated) and a shutter unit (not illustrated). The plurality of transport robots constitute a transport unit that transports the substrate W among the plurality of carriers C (the plurality of load ports LP), the inversion unit 5, the first spin chuck 6A, and the second spin chuck 6B.

A storage shelf (not illustrated) for temporarily storing transported objects (carriers) may be disposed in the vicinity of the cleaning apparatus group i including the substrate cleaning apparatus 310.i.1. Such a storage shelf is disposed in the vicinity of the load ports of the substrate cleaning apparatuses 310.i.1 to 310.i.mi. The storage shelf includes a plurality of placement portions arranged in a height direction in a plurality of rows (for example, three rows), on which transported objects are placed. In the placement portions, the transported objects are positioned by a predetermined mechanism. Here, although not particularly limited, the storage shelf may be configured to be sealed in an environment of an inert gas (for example, nitrogen gas). In such an environment, when semiconductor substrates are stored, changes in surface conditions of the semiconductor substrates can also be suppressed.

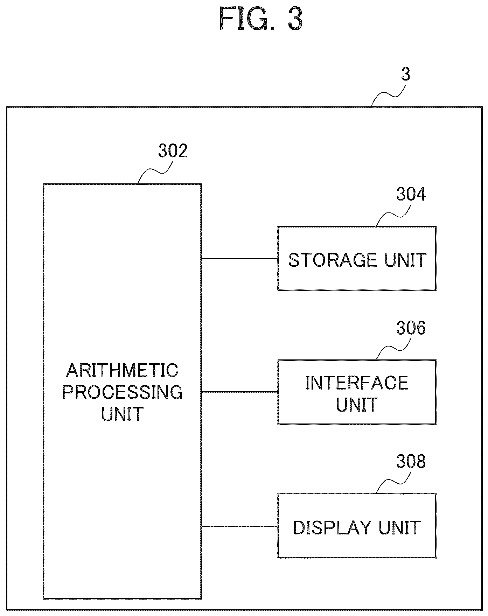

FIG. 3 is a schematic block diagram illustrating a configuration of the control apparatus 3 illustrated in FIG. 2.

A storage unit 304 stores data such as programs and control parameters for controlling liquid processing of the semiconductor substrates W as described above and controlling transport of the semiconductor substrates within the apparatus by the transport robots. Functions of the storage unit 304 are implemented by, for example, at least one of a volatile semiconductor memory, a non-volatile semiconductor memory, and a non-volatile storage device.

An arithmetic processing unit 302 controls operations of the substrate cleaning apparatus 310.i.1 based on programs and data stored in the storage unit 304. Functions of the arithmetic processing unit 302 are implemented by, for example, a central processing unit.

An interface unit 306 transmits commands from the arithmetic processing unit 302 to the transport robots and the liquid processing apparatuses 4, or receives state information from the transport robots and the liquid processing apparatuses 4. Alternatively, the interface unit 306 exchanges control signals with a corresponding group control apparatus 310.i.

A display unit 308 displays, to the outside, information such as processing state information of the substrate cleaning apparatus 310.i.1.

### (Control by Manufacturing execution control system)

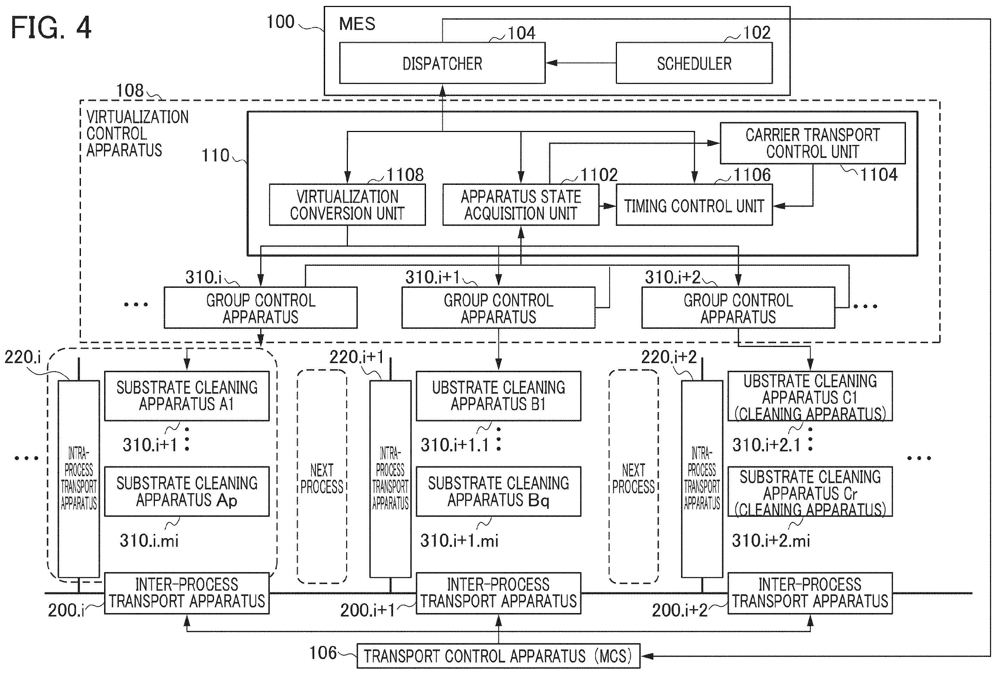

FIG. 4 is a schematic block diagram for explaining a configuration in which the manufacturing execution control system 1000 illustrated in FIG. 1 controls production processes in a manufacturing line including cleaning apparatus groups i to i+2. Accordingly, the same components as those described in FIG. 1 are denoted by the same reference signs, and descriptions thereof will not be repeated.

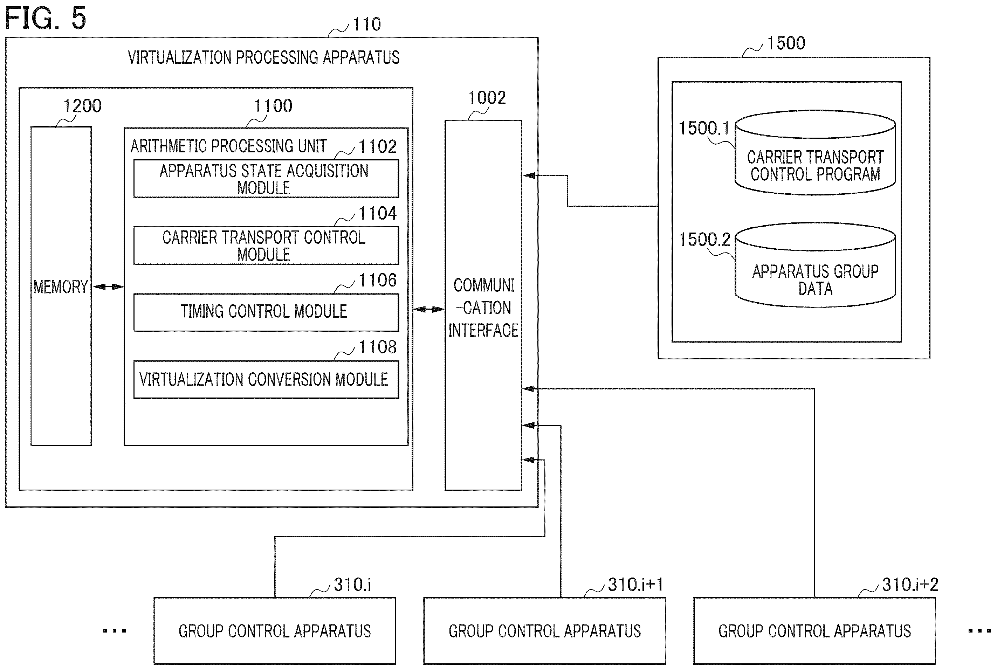

FIG. 5 is a functional block diagram for explaining a configuration of the virtualization processing apparatus 110.

Referring to FIGS. 4 and 5, the MES 100 includes a scheduler 102 that creates a production plan in accordance with types and specifications of products to be manufactured, and a dispatcher 104 that, in accordance with the created production plan, identifies processing apparatuses that are to perform processing on semiconductor substrates to be processed, and performs processing for instructing the substrate processing apparatuses and transport systems with respect to processing contents for the semiconductor substrates to be processed and transport control contents, respectively.

As described with reference to FIG. 1, a transported object, which is a carrier for semiconductor substrates, is provided with identification information that is uniquely identifiable. In this embodiment, an ID tag provided with identification information is attached to the transported object. The identification information attached to the transported object is not limited to an ID tag, and may be, for example, a barcode.

ID tag readers are provided in the substrate cleaning apparatuses 310.i.1 to 310.i.mi, read the ID tag T of a transported object, and acquire carrier identification information. Alternatively, the ID tag reader may be configured to read the ID tag attached to a transported object and acquire carrier identification information before transporting the transported object stored in a storage shelf (before transferring the transported object to a load port). The ID tag reader transmits the acquired carrier identification information to a corresponding group control apparatus 310.i, and the group control apparatus 310.i further outputs the acquired carrier identification information and virtualized apparatus identification information to an apparatus state acquisition unit 1102 of the virtualization processing apparatus 110. An attachment position of the ID tag reader is not particularly limited as long as the ID tag of the transported object can be read. Here, the virtualized apparatus identification information may be held in advance by the group control apparatus 310.i as data for virtualization so that the MES can perform control, or may be generated by the group control apparatus 310.i based on communication data with the substrate cleaning apparatuses 310.i.1 to 310.i.mi.

The apparatus state acquisition unit 1102 notifies the dispatcher 104 of the MES 100 of the acquired carrier identification information together with the virtualized apparatus identification information from which the carrier identification information has been acquired. With such a configuration, the dispatcher 104 of the MES 100 recognizes that a transported object identified by the carrier identification information has been loaded into the substrate cleaning apparatus identified by the virtualized apparatus identification information.

### (Processing Contents of Overtaking Control in Embodiment 1)

### (Lot Identification for Wafers Stored in Transported Objects (FOUPs))

Hereinafter, as Embodiment 1, a configuration as described below is assumed as a method for lot identification (including information on "priority") for wafers stored in transported objects (FOUPs).

With such a configuration, when a lot having a high priority (hereinafter referred to as a "hot lot") is introduced into a manufacturing line, it becomes possible to process the hot lot by overtaking normal lots.

That is, when a carrier is loaded into an apparatus group, lot ID information is transmitted from the MES 100 to the group control apparatuses 310.i to 310.i+2. In this case, the lot ID is common across processes (in this case, the lot ID may be read as a substrate ID (wafer identification information)).

Accordingly, for example, when a carrier is loaded into a subordinate apparatus, the group control apparatus 310.i receives the "lot ID" from the MES 100, and information on "priority" for wafers in the lot is transmitted to the group control apparatus 310.i each time a cleaning process is designated, and is shared with the group control apparatus 310.i+1 of the cleaning apparatus group i+1 that performs processing after the next process.

Also in and after the group control apparatus 310.i+1, information on "priority" for wafers in the lot is shared with the cleaning apparatus group i+2 that performs processing after the next process. Thereafter, the same applies to further subsequent processes.

That is, at a point in time when a group control apparatus recognizes that a "hot lot" has been introduced into a subordinate cleaning apparatus group, at least a group control apparatus of a subsequent process also recognizes that the "hot lot" will arrive, and performs preparation for prioritizing processing in the subordinate cleaning apparatus group.

In other words, in Patent Document 3 described above, when a plurality of processing blocks are provided in one substrate processing apparatus, substrate processing of a subsequent priority lot is executed merely "in parallel" with processing of a normal lot, thereby enabling interruption processing of the subsequent priority lot. In contrast, in the present embodiment, by sharing information on a "hot lot" among substrate processing apparatuses of consecutively executed processes, preparation is made in advance in subsequent processes to process the hot lot with priority over normal lots, and, in the subsequent processes, processing can be executed such that the hot lot overtakes normal lots.

Hereinafter, on the MES 100 side, it is assumed that, on the premise that a plurality of substrate processing apparatuses are individually controlled, the cleaning apparatus group is recognized as being virtually a single substrate processing apparatus, and processing is executed accordingly. Therefore, it is assumed that instructions are generated and transmitted from the MES 100 to the substrate processing apparatus (here, a substrate cleaning apparatus) in accordance with existing standards.

Accordingly, first, it is assumed that the following instructions are transmitted from the MES 100 to the group control apparatus i of the cleaning apparatus group i.

A "control job" is an instruction specifying a processing unit in a substrate processing apparatus.

A "process job" is a minimum unit of processing in a substrate processing apparatus and is a constituent element of a control job.

Here, for example, within an instruction of a "ControlJob" for determining a processing order of process jobs and a return destination carrier, there is an area called "ControlRule", which is optional and can be freely used by the apparatus, and priority information can be handled in this area.

For example, within an instruction of a "ProcessJob" for associating a recipe with a material to be processed, there is an area called "RecipeVariable", which is optional and can be freely used by the apparatus, and priority information can be handled in this area.

With such a configuration, a hot lot can be identified due to the following assumptions.

First, lot identification within a FOUP is possible because information from the MES 100 includes a lot ID together with a carrier ID and a slot map. Examples of methods of notifying the lot ID include the following. Example 1: Including a lot ID (LotID) in the carrier ID.

Example 2: Including a lot ID (LotID) in content map information from the MES 100. Instead of the lot ID, a substrate ID (SubstrateID) may be used.

Next, in the cleaning apparatus group i, a carrier ID is read, and the corresponding group control apparatus 310.i identifies the lot ID together with the carrier ID.

Further, in recognizing a hot lot by the carrier transport control unit 1104, i) priority information of a lot is included in a control job generation request transmitted from the MES 100 to the cleaning apparatus group i, or ii) priority information of a lot is included in a process job generation request transmitted from the MES 100 to the cleaning apparatus group i.

Thereafter, the group control apparatus 310.i can notify the group control apparatus 310.i+1 of the next process of the lot ID and the priority information.

Hereinafter, it is assumed that information on "priority" for wafers in a lot is included by the MES 100 in an optional area (freely usable on the substrate processing apparatus side) within a control job generation request or a process job generation request, and is transmitted to the group control apparatus i.

The configuration is not limited to the above, and, as described above, without particularly changing communication specifications on the MES 100 side, as long as transmission from the MES 100 to the group control apparatus i is possible, a configuration may be adopted in which information on "priority" for wafers in a lot is included in a predetermined area within data or commands used for communication with individual substrate processing apparatuses that are not premised on virtualization.

Based on the above, assuming that a lot ID is the same across processes (between apparatuses), by specifying "priority" in a control job or a process job, it becomes possible to execute "overtaking processing" as described below.

Procedure 1: The group control apparatus 310.i is given a lot ID from the MES 100 via the virtualization processing apparatus 110 at a time of carrier loading.

Procedure 2: The group control apparatus 310.i obtains priority information from the MES 100 via the virtualization processing apparatus 110.

2-1) Pattern 1: Priority information is obtained from a recipe variable accompanying a process job generation request.

2-2) Pattern 2: Priority information is obtained from a control rule accompanying a control job generation request.

Procedure 3: The group control apparatus i identifies a wafer having a high priority based on a carrier ID and a slot number for specifying a slot position in which the wafer is accommodated, and registers the lot ID and the priority in the virtualization processing apparatus 110.

Procedure 4: The group control apparatus 310.i+1 is given a lot ID from the MES 100 via the virtualization processing apparatus 110 before or at a time of carrier loading.

Procedure 5: The group control apparatus 310.i+1 receives, from the virtualization processing apparatus 110, a notification of a priority of the lot ID of wafers in a carrier that is scheduled to arrive or has actually arrived.
i) If possible, the group control apparatus 310.i+1 secures an available port before arrival of the carrier having a high priority and performs preparation for priority processing.
ii) When the carrier having a high priority actually arrives and an available port is not prepared, the group control apparatus 310.i+1 performs preparation for enabling priority processing of a hot lot, such as causing processing of another normal lot waiting in a stocker to wait, or preventing preparation operations for another normal lot from being started. Such an instruction "for performing preparation for enabling priority processing of a hot lot and causing processing of a normal lot to wait" is referred to as a "processing waiting instruction".

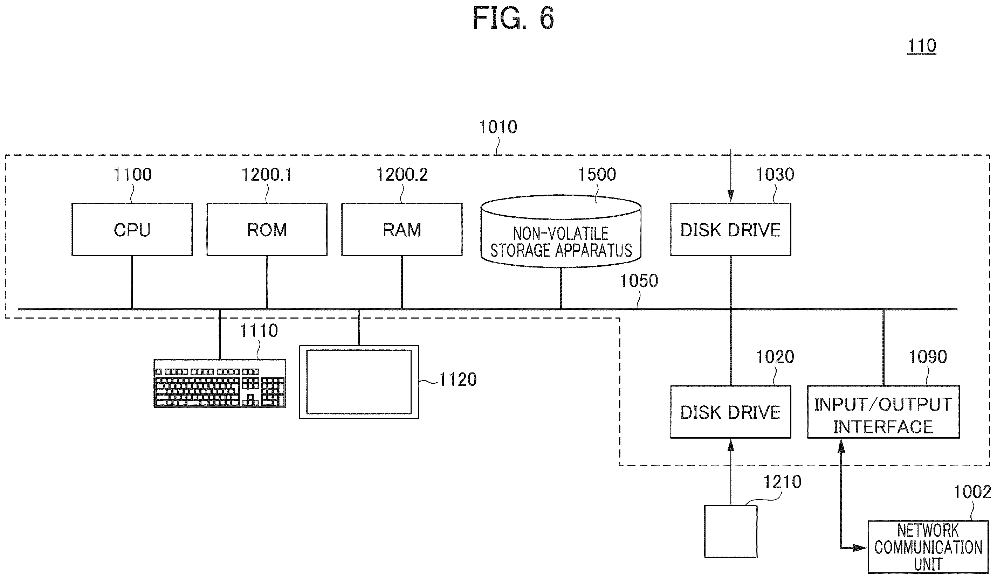

FIG. 6 is a block diagram for explaining a hardware configuration of the virtualization processing apparatus 110 illustrated in FIG. 5.

The virtualization processing apparatus 110 may operate, for example, on an on-premises server. Alternatively, the virtualization processing apparatus 110 may operate on a server operating in a cloud environment.

Hereinafter, a configuration of the virtualization processing apparatus 110 will be described as an example; however, hardware configurations of other computers are basically the same.

Referring to FIG. 6, the virtualization processing apparatus 110 may have a configuration in which an processor (CPU: Central Processing Unit) provided in its own housing executes arithmetic processing, or may have a configuration in which part of processing of a program is further executed on another server. Hereinafter, a description will be given assuming that the processor provided in its own housing executes arithmetic processing.

Referring to FIG. 6, the virtualization processing apparatus 110 includes a computer apparatus 1010, a network communication unit 1002 for communicating with a network, and a recording medium (for example, a memory card) 1210 for recording data from outside and providing the data to the computer apparatus 1010.

For example, as the recording medium 1210, a USB memory, a memory card, or an external storage device can be used. As the network communication unit 1012, for example, a communication function of a wired LAN or a wireless LAN can be used. The network communication unit 1012 and an input/output interface 1090 constitute a communication interface 1002.

As illustrated in FIG. 6, a computer main body constituting the computer apparatus 1010 includes, in addition to a disk drive 1030 and a memory drive 1020, a CPU 1100 connected to a bus 1050, a memory 1200 including a ROM (Read Only Memory) 1200.1 and a RAM (Random Access Memory) 1200.2, a non-volatile rewritable non-volatile storage apparatus 1300, and an input/output interface 1090 for performing communication via a network and exchange of data with the outside. As the non-volatile storage apparatus 1300, for example, an HDD (Hard Disc Drive) or an SSD (Solid State Drive) is used. Hereinafter, the non-volatile storage apparatus 1300 is assumed to be an SSD. An optical disk can be mounted in the disk drive 1030. The memory card 1210 can be mounted in the memory drive 1020.

The following description assumes that, when a program of the computer apparatus 1010 operates, data and programs that store information serving as a basis for operation of the computer are stored in an SSD 1500.

In FIG. 6, as a medium capable of recording information such as programs to be installed in the computer main body, for example, a DVD-ROM (Digital Versatile Disc), a memory card, a USB memory, or the like may be used. In order to support such a case, the computer main body is provided with drive apparatuses (the memory drive 1020 and the disk drive 1030) capable of reading these media.

A main portion of the computer apparatus 1010 is constituted by computer hardware and software executed by the CPU 1100. In general, such software is stored in a non-transitory recording medium and distributed, or distributed via a network, acquired via the disk drive 1030 or the network communication unit 1012, and temporarily stored in the SSD 1500. Thereafter, the software is read from the SSD 1500 into the RAM 1200.2 in the memory and executed by the CPU 1100. When network-connected, the software may be directly loaded into the RAM and executed without being stored in the SSD 1500.

A program for causing the computer apparatus 1010 to function does not necessarily include, in the program itself, an operating system (OS) that causes the computer main body 1010 to execute functions of an information processing apparatus or the like. The program only needs to include a portion of instructions that call appropriate functions (modules) in a controlled manner so as to obtain a desired result. How the computer system 1010 operates is well known, and detailed descriptions thereof are omitted.

Further, the CPU 1100 may be a single-core processor or a multi-core processor. That is, the CPU 1100 may be a single-core processor or a multi-core processor. The virtualization processing apparatus 110 may also be configured to be constituted by a plurality of servers and to execute distributed processing.

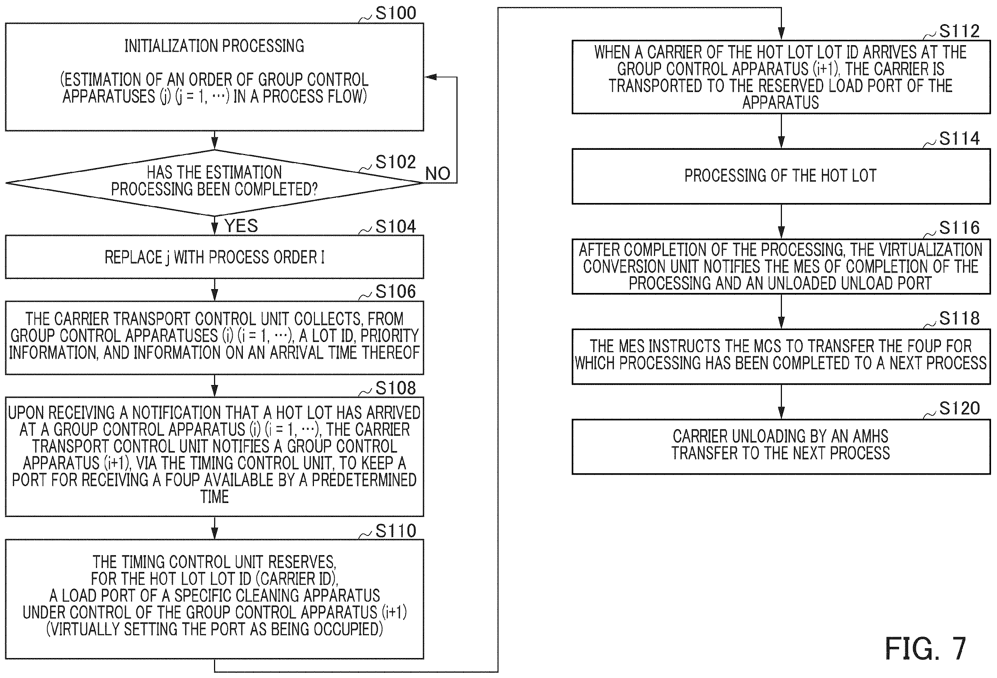

FIG. 7 is a flowchart for explaining processing executed by the virtualization processing apparatus 110 according to Embodiment 1.

In the flowchart, a j-th group control apparatus initially associated with the virtualization processing apparatus 110 is denoted as a group control apparatus (j).

Referring to FIG. 7, the carrier transport control unit (carrier transport control module) 1104 of the virtualization processing apparatus 110 first executes initialization processing (S100). Here, the initialization processing refers to processing for estimating an order of group control apparatuses (j) (j = 1, ...) in a process flow.

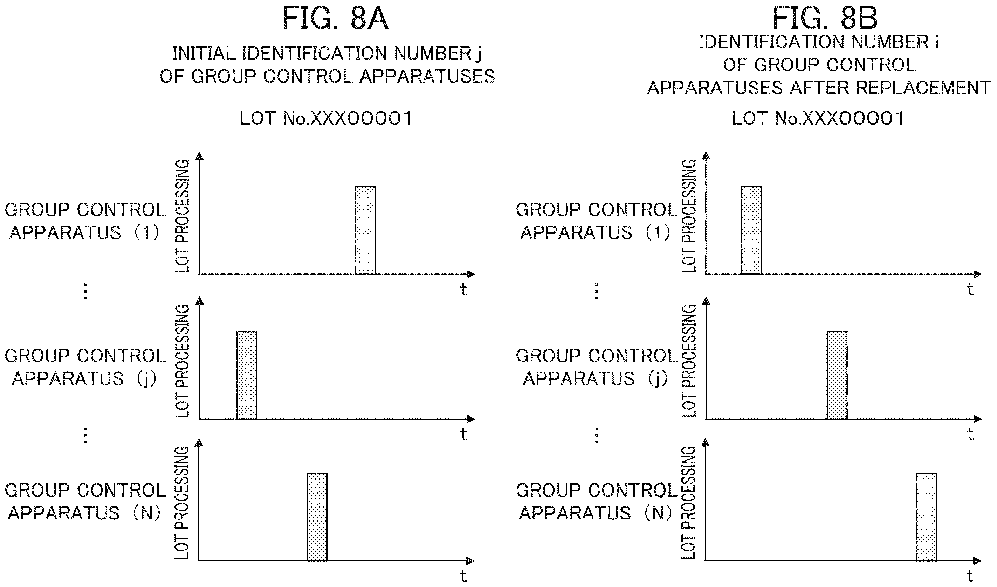

FIG. 8 is a conceptual diagram illustrating a procedure of the initialization processing.

That is, as illustrated in FIG. 8(a), which processing step in a processing flow of a specific lot corresponds to a j-th group control apparatus initially associated with the virtualization processing apparatus 110 cannot be recognized by the virtualization processing apparatus 110 unless setting processing is particularly performed. Naturally, it is also possible to register in advance a correspondence relationship between a processing flow of a lot and identification numbers of group control apparatuses.

However, as illustrated in FIG. 8, by the virtualization processing apparatus 110 collecting history information of processing actually executed for a lot "Lot No. XXX00001", it is also possible to perform processing for rearranging identification numbers i of the group control apparatuses so as to follow a flow of processing steps, as illustrated in FIG. 8(b). For example, the group control apparatuses may be associated so as to be arranged along a flow of processes, from a front end to a back end.

In the processing of FIG. 7, an example is illustrated in which, by simply connecting the virtualization processing apparatus 110 to the existing MES 100, a flow that does not require particular advance setting processing is achieved.

That is, when the carrier transport control unit 1104 determines that the initialization estimation processing has been completed (Y in S102), the carrier transport control unit 1104 replaces the identification number j of the group control apparatus with a process order number i, and stores data of the estimated correspondence as apparatus group data 1500.2 in the storage apparatus 1500 (S104).

Accordingly, while the initialization estimation processing has not been completed in Step S102 (N in S102), the virtualization processing apparatus 110 merely performs processing for simply transferring information with respect to exchange of data and commands between the MES 100 and the group control apparatuses.

Here, completion of the initialization estimation processing is not particularly limited; however, for example, when "XXX" of "Lot No. XXX00001" specifies a type of lot or a process flow, completion may be determined based on completion of processing of a predetermined number or more of lots of the same type, or based on a state in which no change is observed in correspondence between an order of the process flow and identification numbers i of the group control apparatuses. Accordingly, although this is not limiting, the initialization estimation processing may be executed each time a new type of lot is introduced, and correspondence between an order of the process flow and identification numbers i of the group control apparatuses may be performed for each lot type and stored as apparatus group data 1500.2 in the storage apparatus 1500.

Subsequently, the carrier transport control unit 1104 collects, from the group control apparatuses (i) (i = 1, ...) via the apparatus state acquisition unit (apparatus state acquisition module) 1102, a lot ID, priority information, and information on an arrival time thereof (S106).

Further, when the carrier transport control unit 1104 receives a notification indicating that a hot lot has arrived at a group control apparatus (i) (i = 1, ...), the carrier transport control unit 1104 notifies a group control apparatus (i+1), via a timing control unit (timing control module) 1106, to keep a port for receiving a FOUP available by a predetermined time (S108).

Subsequently, the timing control unit 1106 reserves, for a hot lot's lot ID (carrier ID), a load port of a specific subordinate cleaning apparatus under control of the group control apparatus (i+1) (S110).

That is, as processing for preparation to keep a load port of a subsequent process available for the hot lot, the port is virtually set as being occupied.

Subsequently, when a carrier having the hot lot's lot ID arrives at the group control apparatus (i+1), the group control apparatus (i+1) transports the carrier to the reserved load port of the apparatus (S112).

Under control of the group control apparatus (i+1), processing of the hot lot is executed by the corresponding cleaning apparatus group i+1 (S114).

When a virtualization conversion unit (virtualization conversion module) 1108 receives, after completion of the processing, a notification of completion of the processing from the group control apparatus (i+1), the virtualization conversion unit 1108 notifies the MES 100 of completion of the processing and an unloaded unload port (S116).

The MES 100 instructs the MCS 106 to transfer the FOUP for which processing has been completed to a next process (S118).

In accordance with the instruction from the MCS 106, an AMHS (Automated Material Handling System) executes carrier unloading and transfers the carrier to the next process (S120) .

With the configuration described above, a manufacturing execution control system capable of shortening a processing lead time of a priority lot in a manufacturing line is realized.

With such a manufacturing execution control system, it becomes possible to control a flow of processes in a manufacturing line of lots so as to prioritize processing of a priority lot, while maintaining an existing production control scheme.

### [Modification of Embodiment 1]

In Embodiment 1, a configuration is adopted in which overtaking control of a hot lot is enabled by notifying a group control apparatus of a next process of arrival of the hot lot.

In contrast, in a modification of Embodiment 1, a configuration will be described in which "processing times of respective processes" of lot processing are estimated, and an estimated arrival time of a hot lot is notified to group control apparatuses of subsequent processes.

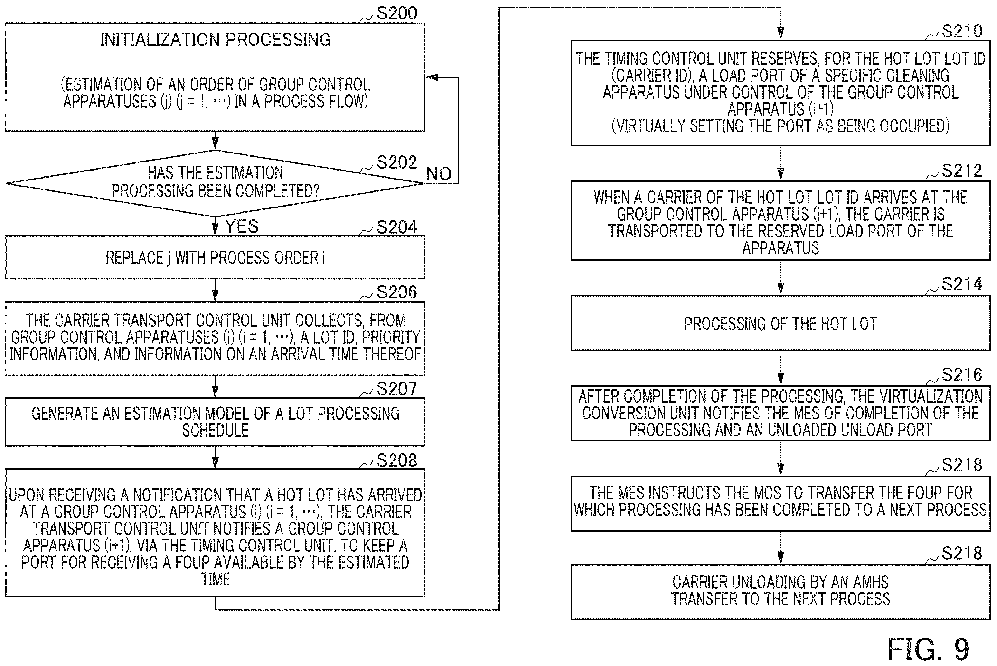

FIG. 9 is a flowchart for explaining processing executed by the virtualization processing apparatus 110 in the modification of Embodiment 1.

This flowchart differs from the flowchart of Embodiment 1 illustrated in FIG. 7 in the following two points.

That is, the processing of Steps S200 to S206 in FIG. 8 is the same as the processing of Steps S100 to S106 in FIG. 6.

In FIG. 9, in Step S207, the carrier transport control unit (carrier transport control module) 1104 generates an estimation model of a lot processing schedule.

Further, when the carrier transport control unit 1104 receives a notification indicating that a hot lot has arrived at a group control apparatus (i) (i = 1, ...), the carrier transport control unit 1104 notifies, via the timing control unit (timing control module) 1106, a group control apparatus (i+1) to keep a port for receiving a FOUP available by a time estimated in Step S207 (S208).

The processing of Steps S210 to S220 in FIG. 8 is the same as the processing of Steps S110 to S120 in FIG. 6.

However, in FIG. 9, although not explicitly described, the group control apparatus (i+1) receives notification of an estimated arrival time of the hot lot estimated in Step S207. Therefore, when it is determined that processing of a normal lot that has already arrived at the cleaning apparatus group i+1 can be completed before the estimated arrival time, it is possible to complete processing of the normal lot in advance.

Alternatively, even when rescheduling of processing between a normal lot and a priority lot is executed, such an estimated arrival time can be taken into consideration.

Generation of such an estimation model of a lot processing schedule is executed based on a carrier transport control program 1500.1 in the storage apparatus 1500.

Although not particularly limited, generation of an estimation model of a lot processing schedule can be realized, for example, by a method disclosed in the following Non-Patent Document 1. Non-Patent Document 1: Cristina Morariu et al., "Machine learning for predictive scheduling and resource allocation in large scale manufacturing systems", Computers in Industry, Volume 120, September 2020, 103244. https://www.sciencedirect.com/science/article/abs/pii/S0166361 519311595

In Non-Patent Document 1 described above, deep learning using a recurrent neural network LSTM (Long Short-Term Memory) model is used.

Also in FIG. 9, in Step S100, information on lot processing is collected. When time-series data of processing of a plurality of lots is collected, in accordance with the method described in Non-Patent Document 1, it becomes possible to cluster (classify) flows of lots flowing through a manufacturing line based on acquired actual processing data, and to predict processing times of respective processes required for processing of a given lot.

However, prediction of time-series data is not limited to this method.

### [Embodiment 2]

In Embodiment 1, it has been assumed that the virtualization processing apparatus 110 side grasps both identification information (carrier ID) of a carrier that is a transported object and a lot ID (and priority information) within the carrier.

In Embodiment 2, a configuration will be described for a case where information of a lot ID (and priority information) itself is not necessarily transmitted from the MES 100 to the virtualization processing apparatus 110.

However, it is assumed that, even if wafers in a FOUP are replaced with those of a different lot between processes, such replacement occurs only in cleaning apparatuses. That is, even if "same-carrier operation" or "separate-carrier operation" is performed, such operation is assumed to be limited to cleaning apparatuses.

Accordingly, if each FOUP (carrier) is identified, for example, by RFID, and carrier replacement is not performed in apparatuses other than cleaning apparatuses, history of carrier IDs can be stored and managed in the virtualization processing apparatus, thereby enabling the history to be used as an alternative to management of lot IDs in Embodiment 1. In Embodiment 2, a lot ID for management of processing of such a "priority lot" may be information that is not verified for consistency with an actual lot ID and may be used in initialization processing; therefore, such an ID will be referred to as a "temporary lot ID". However, as described above, even if replacement with a different lot occurs between processes, as long as replacement occurs only in cleaning apparatuses, and if the MES 100 notifies the group control apparatus 310.i of priority of a lot each time, processing of a priority lot itself can be performed without error.

That is, if information on "priority" for wafers in a FOUP is transmitted from the MES 100 to a group control apparatus (i) each time a cleaning process is designated, and information of the carrier ID and the priority for the FOUP is shared with a group control apparatus (i+1), overtaking control can be performed in the same manner as in Embodiment 1.

As described above, in Embodiment 2, it is assumed that, among information compatible with an existing MES 100, a carrier ID and a slot map are provided to each substrate processing apparatus, but a lot ID is not necessarily notified.
1) In a cleaning apparatus group, a carrier ID is read. Accordingly, the group control apparatus side grasps a carrier ID of a carrier to be unloaded.

i) As in Embodiment 1, as an option, priority information of a lot is included in a control job generation request transmitted from the MES 100 to the group control apparatus.
ii) As in Embodiment 1, as an option, priority information of a lot is included in a process job generation request transmitted from the MES 100 to an apparatus.

Based on the above, the group control apparatus 310.i notifies the group control apparatus 310.i+1 of the next process of a temporary lot ID associated with the carrier ID and priority information.

Accordingly, the following procedures can be implemented as Embodiment 2.

Procedure 1: The group control apparatus 310.i obtains priority information from the MES 100 by one of the following methods.
i) Pattern 1: Priority information is obtained from a recipe variable accompanying a process job generation request.
ii) Pattern 2: Priority information is obtained from a control rule accompanying a control job generation request.

Procedure 2: The group control apparatus 310.i identifies a FOUP having a high priority.

Specifically, at a time of control job generation, based on a process job for which priority is specified in Pattern 1 or a process job for which priority is specified in Pattern 2, and designation of a return-destination FOUP, the group control apparatus 310.i identifies a FOUP having a high priority that is to be transported to a next apparatus.

Procedure 3: The group control apparatus 310.i registers carrier ID and priority information in the virtualization processing apparatus 110.

Procedure 4: After receiving a FOUP, the group control apparatus 310.i+1 reads a carrier ID (CARRIER ID) using a carrier ID reader (a barcode reader or a wireless tag).

Procedure 5: The group control apparatus 310.i+1 checks, with the virtualization processing apparatus 110, a priority of the arrived FOUP.

When the priority associated with the carrier ID is high, the group control apparatus 310.i+1 performs preparation for priority processing, such as causing other processing to wait or preventing preparation operations from being started.

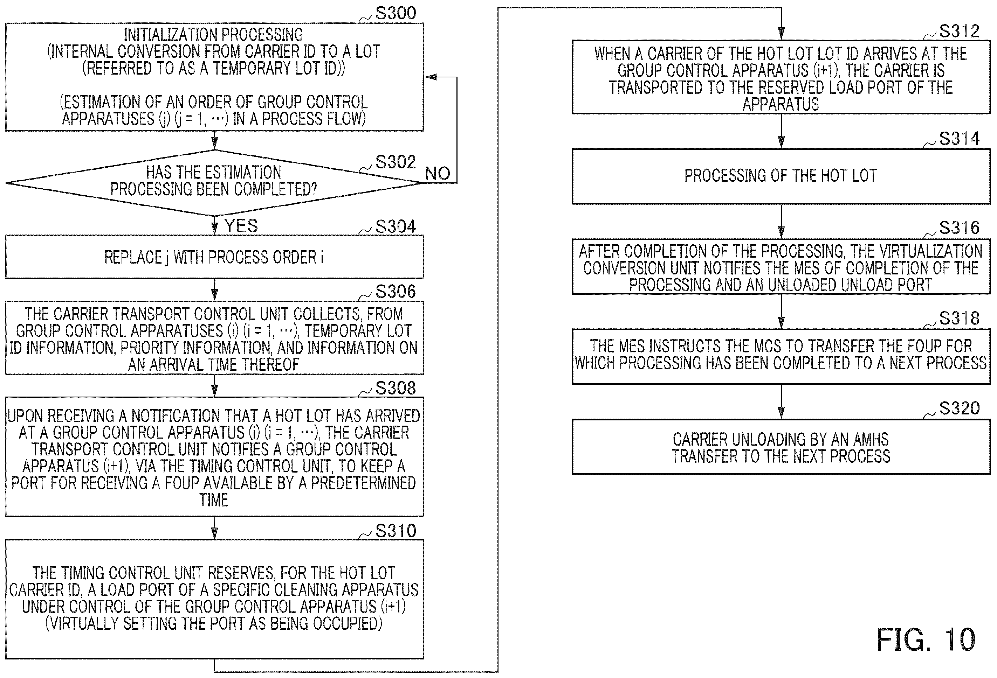

FIG. 10 is a flowchart for explaining processing executed by the virtualization processing apparatus 110 according to Embodiment 2.

This flowchart differs from the flowchart of Embodiment 1 illustrated in FIG. 7 in the following three points.

That is, Steps S300 to S304 in FIG. 10 correspond to initialization processing and processing for estimating an order of group control apparatuses (j) (j = 1, ...) in a process flow.

As in Embodiment 1, although the processing of Steps S300 to S304 is not essential, as described above, since the carrier transport control unit 1104 in the virtualization processing apparatus 110 does not receive lot ID information from the MES 100, during initialization processing, irrespective of priority, the carrier transport control unit 1104 receives registration of a temporary lot ID for wafers in a specific FOUP from the group control apparatus side, as described above.

That is, in the initialization processing of Step S300, an internal conversion from a carrier ID to a temporary lot ID is executed, and assuming that wafers of the temporary lot ID sequentially flow through the process flow, an order of group control apparatuses (j) (j = 1, ...) in the process flow is estimated.

Processing of Steps S302 to S304 is the same as that in the flowchart of Embodiment 1 illustrated in FIG. 7, and therefore descriptions thereof will not be repeated.

In Step S306, as described above, the carrier transport control unit 1104 collects, from group control apparatuses (i) (i = 1, ...), temporary lot ID information, priority information, and information on an arrival time thereof.

Thereafter, processing of Steps S308 to S320 is also, in principle, the same as that in the flowchart of Embodiment 1 illustrated in FIG. 7.

Also in the processing of FIG. 10, as in the modification of Embodiment 1, a configuration may be adopted in which an estimation model of a lot processing schedule is generated.

With configurations of Embodiment 1 to Embodiment 2 as described above, a manufacturing execution control system capable of shortening a processing lead time of a priority lot in a manufacturing line is realized.

With such a manufacturing execution control system, it becomes possible to control a flow of processes in a manufacturing line of lots so as to prioritize processing of a priority lot, while maintaining an existing production control scheme.

A manufacturing execution control method implemented by such a manufacturing execution control system is implemented by a CPU executing a computer program stored in the storage apparatus 1500. In the present specification, a "production control execution apparatus" corresponds, for example, to an MES. The expression that the "production control execution apparatus generates and outputs, based on a production plan, process control signals for processing of objects to be processed by identifying, for each manufacturing process, apparatus groups using a single identification code obtained by virtualizing the apparatus groups" corresponds, for example, to processing in which the MES identifies apparatus groups by a single piece of "virtualized apparatus identification information" and generates and outputs process control signals for processing of the objects to be processed.

The embodiments disclosed herein are examples of configurations for specifically implementing the present invention, and are not intended to limit the technical scope of the present invention. The technical scope of the present invention is defined by the claims, not by the description of the embodiments, and is intended to include modifications within the scope of the wording of the claims and equivalents thereof.

### EXPLANATION OF REFERENCE NUMERALS

100: MES
106: MCS
110: virtualization processing apparatus
200: inter-process transport system
202.i to 202.i+2: stockers
220.i to 220.i+2: intra-process transport systems
310.i to 310.i+2: group control apparatuses
310.i.1 to 310.i+2.mi: substrate cleaning apparatuses
400: film formation apparatus
500: lithography apparatus
1000: manufacturing execution control system
1102: apparatus state acquisition unit
1104: carrier transport control unit
1106: timing control unit
1108: virtualization conversion unit

## Claims

1. A manufacturing execution control system for controlling production processing of a plurality of objects to be processed as a group in a manufacturing line, wherein the manufacturing line includes a plurality of manufacturing apparatuses arranged as apparatus groups, and wherein the manufacturing apparatuses respectively execute a plurality of manufacturing processes using the plurality of objects to be processed as processing units, the manufacturing execution control system comprising:
a production control execution apparatus configured to create, for a group of the objects to be processed, a production plan including a series of the manufacturing processes and information on processing priority for a specific priority group, and based on the production plan, generate and output process control signals for processing of the objects to be processed by identifying, for each of the manufacturing processes, the apparatus groups using a single identification code obtained by virtualizing the apparatus groups;
a virtualization processing apparatus configured to receive the process control signals from the production control execution apparatus and to convert the process control signals into group control signals for the apparatus groups of the manufacturing processes identified by the identification code; and
a plurality of group control apparatuses provided corresponding to the respective apparatus groups and configured to individually control corresponding manufacturing process apparatuses in accordance with the group control signals,
wherein the virtualization processing apparatus includes a memory storing a program and one or more processors, and wherein the one or more processors are, based on the program, configured to:
(i) virtualize control signals exchanged between the production control execution apparatus and the apparatus groups and convert the control signals into the group control signals;
(ii) acquire state information of the respective apparatus groups; and
(iii) based on (a) a transport status of a transport carrier for transporting the group of objects to be processed acquired as the state information, and (b) a priority of the objects to be processed in the transport carrier specified in accordance with information from the production control execution apparatus, output, in response to arrival of a transport carrier having a high priority at a first group control apparatus among the group control apparatuses, a notification to a second group control apparatus of a subsequent process indicating that the transport carrier having the high priority is scheduled to arrive,
wherein the second group control apparatus is, in response to the notification, configured to give a waiting instruction to one manufacturing process apparatus among the apparatus group corresponding to a control target, the waiting instruction instructing the manufacturing process apparatus to wait for processing until arrival of the transport carrier having the high priority.

2. The manufacturing execution control system according to claim 1, wherein the information from the production control execution apparatus includes:
lot identification information for identifying the group, the lot identification information being included in information for identifying the transport carrier; and
priority information, the priority information being included in information for instructing the manufacturing process apparatus to execute the manufacturing process.

3. The manufacturing execution control system according to claim 1 or 2, wherein each of the manufacturing process apparatuses includes a plurality of ports for receiving the transport carrier, and
wherein the manufacturing process apparatus that receives the waiting instruction from the second group control apparatus stops accepting the transport carrier at one of the plurality of ports until arrival of the transport carrier having the high priority.

4. The manufacturing execution control system according to claim 1, wherein the one or more processors are configured, in processing for outputting the notification indicating that the transport carrier having the high priority is scheduled to arrive, to estimate, as an initial setting, a position of each group control apparatus in a process flow of the manufacturing line, based on the lot identification information.

5. The manufacturing execution control system according to claim 4, wherein the one or more processors are configured, in processing for acquiring the state information of the respective apparatus groups, to acquire, for each piece of the lot identification information, information on passage times through the manufacturing processes corresponding to the apparatus groups as time-series data, and
to classify, based on the time-series data, the lot identification information into a plurality of process patterns in accordance with patterns of the passage times; and
in processing for outputting the notification indicating that the transport carrier having the high priority is scheduled to arrive, to notify an estimated arrival time at which the transport carrier having the high priority is scheduled to arrive, in accordance with (a) the lot identification information, (b) a corresponding process pattern, and (c) the priority information,
wherein the second group control apparatus is configured to output the waiting instruction in accordance with the estimated arrival time.

6. The manufacturing execution control system according to claim 1, wherein the manufacturing process is a semiconductor device manufacturing process, and the manufacturing process apparatus is a semiconductor wafer cleaning apparatus.

7. A computer-implemented manufacturing execution control method for controlling production processing of a plurality of objects to be processed as a group in a manufacturing line, wherein the manufacturing line includes a plurality of manufacturing apparatuses arranged as apparatus groups, and wherein the manufacturing apparatuses respectively execute a plurality of manufacturing processes for processing the plurality of objects to be processed as processing units,
the manufacturing execution control method comprising the steps of:
creating, by a production control execution apparatus, for the group of objects to be processed, a production plan including a series of the manufacturing processes and information on processing priority for a specific priority group, and, based on the production plan, generating and outputting process control signals for processing of the objects to be processed by identifying, for each of the manufacturing processes, the apparatus groups using a single identification code obtained by virtualizing the apparatus groups;
receiving the process control signals from the production control execution apparatus and converting and outputting, by a virtualization processing apparatus, the process control signals into group control signals for the apparatus groups of the manufacturing processes identified by the identification code; and
individually controlling, by group control apparatuses provided corresponding to the respective apparatus groups, corresponding manufacturing process apparatuses in accordance with the group control signals,
wherein the step of converting and outputting includes:
virtualizing control signals exchanged between the production control execution apparatus and the apparatus groups and converting the control signals into the group control signals;
acquiring state information of the respective apparatus groups; and
based on (a) a transport status of a transport carrier for transporting the group of objects to be processed acquired by the acquiring and (b) a priority of the objects to be processed in the transport carrier specified in accordance with information from the production control execution apparatus, outputting, in response to arrival of a transport carrier having a high priority at a first group control apparatus among the group control apparatuses, a notification to a second group control apparatus of a subsequent process indicating that the transport carrier having the high priority is scheduled to arrive,
wherein the second group control apparatus gives, in response to the notification, a waiting instruction to one manufacturing process apparatus among the apparatus group corresponding to a control target, the waiting instruction instructing the manufacturing process apparatus to wait for processing until arrival of the transport carrier having the high priority.

8. A non-transitory computer readable medium for storing a manufacturing execution control program for causing a computer to execute production processing control for controlling production processing of a plurality of objects to be processed as a group in a manufacturing line, wherein the manufacturing line includes a plurality of manufacturing apparatuses arranged as apparatus groups, and wherein the manufacturing apparatuses respectively execute a plurality of manufacturing processes for processing the plurality of objects to be processed as processing units,
wherein a manufacturing execution control system includes:
a production control execution apparatus configured to create, for the group of the objects to be processed, a production plan including a series of the manufacturing processes and information on processing priority for a specific priority group, and, based on the production plan, to generate and output process control signals for processing of the objects to be processed by identifying, for each of the manufacturing processes, the apparatus groups using a single identification code obtained by virtualizing the apparatus groups; and
a plurality of group control apparatuses provided corresponding to the respective apparatus groups and configured to individually control corresponding manufacturing process apparatuses in accordance with group control signals,
wherein the computer executes a step of receiving the process control signals from the production control execution apparatus and converting and outputting, by a virtualization processing apparatus, the process control signals into group control signals for the apparatus groups of the manufacturing processes identified by the identification code,
wherein the step of converting and outputting includes:
a virtualization conversion step of virtualizing control signals exchanged between the production control execution apparatus and the apparatus groups and converting the control signals into the group control signals;
an apparatus state acquisition step of acquiring state information of the respective apparatus groups; and
a carrier transport control step of, based on (a) a transport status of a transport carrier for transporting the group of objects to be processed acquired by the apparatus state acquisition step and (b) a priority of the objects to be processed in the transport carrier specified in accordance with information from the production control execution apparatus, outputting, in response to arrival of a transport carrier having a high priority at a first group control apparatus among the group control apparatuses, a notification to a second group control apparatus of a subsequent process indicating that the transport carrier having the high priority is scheduled to arrive,
wherein the second group control apparatus is configured to, in response to the notification, give a waiting instruction to one manufacturing process apparatus among the apparatus group corresponding to a control target, the waiting instruction instructing the manufacturing process apparatus to wait for processing until arrival of the transport carrier having the high priority.

9. A manufacturing execution control system for controlling production processing of a plurality of objects to be processed as a group in a manufacturing line, wherein the manufacturing line includes a plurality of manufacturing apparatuses arranged as apparatus groups, and wherein the manufacturing apparatuses respectively execute a plurality of manufacturing processes for processing the plurality of objects to be processed as processing units,
the manufacturing execution control system controlling the production processing in cooperation with a production control execution apparatus that creates, for a group of the objects to be processed, a production plan including a series of the manufacturing processes and information on processing priority for a specific priority group, and generates and outputs process control signals for processing of the objects to be processed based on the production plan, the manufacturing execution control system comprising:
a virtualization processing apparatus configured to receive the process control signals from the production control execution apparatus and convert the process control signals into group control signals for apparatus groups of the manufacturing processes identified by a single identification code obtained by virtualizing the apparatus groups for each manufacturing process; and
a plurality of group control apparatuses provided corresponding to the respective apparatus groups and configured to individually control corresponding manufacturing process apparatuses in accordance with the group control signals,
wherein the virtualization processing apparatus includes a memory storing a program and one or more processors, and
wherein the one or more processors are, based on the program, configured to:
(i) virtualize control signals exchanged between the production control execution apparatus and the apparatus groups and convert the control signals into the group control signals for the group control apparatuses;
(ii) acquire state information of the respective apparatus groups and output, to the production control execution apparatus, the identification code so that the production control execution apparatus identifies the apparatus groups by the identification code and generates the process control signals for processing of the objects to be processed; and
(iii) based on (a) a transport status of a transport carrier for transporting the group of objects to be processed acquired as the state information, and (b) a priority of the objects to be processed in the transport carrier specified in accordance with information from the production control execution apparatus, output, in response to arrival of a transport carrier having a high priority at a first group control apparatus among the group control apparatuses, a notification to a second group control apparatus of a subsequent process indicating that the transport carrier having the high priority is scheduled to arrive,
wherein the second group control apparatus is configured to, in response to the notification, give a waiting instruction to one manufacturing process apparatus among the apparatus group corresponding to a control target, the waiting instruction instructing the manufacturing process apparatus to wait for processing until arrival of the transport carrier having the high priority.
